# EUROPÄISCHE PATENTANMELDUNG

(11) **EP 4 744 476 A1**
(43) Veröffentlichungstag der Anmeldung: **20.05.2026**
(21) Anmeldenummer: 25214690.7
(22) Anmeldetag: 10.11.2025
(51) Int. Cl.: A01F 15/07

(54) **LANDWIRTSCHAFTLICHE ARBEITSMASCHINE ZUM UMHÜLLEN EINES ERNTEGUTBALLENS UND VERFAHREN ZUM BETREIBEN DER LANDWIRTSCHAFTLICHEN ARBEITSMASCHINE**

(30) Priorität: 19.11.2024 DE 102024133819
(71) Anmelder: Maschinenfabrik Bernard Krone GmbH & Co. KG, 48480 Spelle (DE)
(72) Erfinder: Berghaus, André, 48727 Billerbeck (DE); Keuter, Jan, 49733 Haren (DE)

(57) **Zusammenfassung**

Die vorliegende Erfindung betrifft eine landwirtschaftliche Arbeitsmaschine zum Umhüllen eines Erntegutballens, umfassend einen Rahmen, einen Wickelarm, der zum Umhüllen des Erntegutballens relativ zum Rahmen um eine Wickelachse drehbar ist, zumindest eine stationär am Wickelarm angeordnete Rolle, die relativ zum Wickelarm um eine Rollenachse drehbar ist, und die dazu vorgesehen ist, mit einer zum Umhüllen des Erntegutballens genutzten Umhüllungsbahn zusammenzuwirken, und einem Sensor zum Messen einer beim Umhüllen des Erntegutballens auf ihn wirkenden Belastung, wobei der Sensor stationär an der zumindest einen Rolle angeordnet ist. Die vorliegende Erfindung betrifft weiterhin ein Verfahren zum Betreiben einer solchen landwirtschaftlichen Arbeitsmaschine.

## Beschreibung

Die vorliegende Erfindung betrifft eine landwirtschaftliche Arbeitsmaschine zum Umhüllen eines Erntegutballens, umfassend einen Rahmen, einen Wickelarm, der zum Umhüllen des Erntegutballens relativ zum Rahmen um eine Wickelachse drehbar ist, zumindest eine stationär am Wickelarm angeordnete Rolle, die relativ zum Wickelarm um eine Rollenachse drehbar ist, und die dazu vorgesehen ist, mit einer Umhüllungsbahn zusammenzuwirken, und einem Sensor zum Messen einer beim Umhüllen des Erntegutballens auf ihn wirkenden Belastung. Die vorliegende Erfindung betrifft weiterhin ein Verfahren zum Betreiben einer solchen Arbeitsmaschine.

Landwirtschaftliche Arbeitsmaschinen werden dazu genutzt, Ballen aus Erntegut wie beispielsweise Gras, insbesondere Silage, Stroh, Heu oder dergleichen mit einer Umhüllungsbahn zu umhüllen. Dafür weisen sie einen Wickelarm auf, der um eine Wickelachse rotierend antreibbar ist, und der bei der Rotation einen mittig angeordneten Erntegutballen mit der Umhüllungsbahn umhüllt. Die Umhüllungsbahn wird in der Regel unter Spannung auf den Erntegutballen aufgebracht, so dass die Umhüllungsbahn den Erntegutballen möglichst luftdicht umhüllt. Ein luftdichtes Verpacken bewirkt einen Gärprozess des Erntegutes, wenn Erntegutballen für Silage genutzt werden. Durch das Umhüllen des Erntegutballens kann dieser zudem vor Witterungseinflüssen geschützt werden. Weiterhin ist der Erntegutballen durch das Umhüllen formstabil und fällt nicht auseinander. Da je nach Verwendungszweck unterschiedliche Umhüllungsbahnen erforderlich sind, ist eine Vielzahl unterschiedlicher Umhüllungsbahnen, die als Folie ausgebildet sind, oder gegebenenfalls auch als Tuch oder Netz ausgebildet sein können, erhältlich.

Solche Umhüllungsbahnen können bei Überbeanspruchung reißen. Weiterhin kann sich der Bahnvorrat während des Umhüllens aufbrauchen. Eine solche Umhüllungsstörung, insbesondere ein solcher Umhüllungsbahnriss oder ein solches Umhüllungsbahnende, kann dazu führen, dass der Erntegutballen nicht vollständig oder nicht ausreichend luftdicht umhüllt ist.

Die Druckschrift EP 1 310 154 A1 offenbart eine Einrichtung zur Risserkennung in einer Umhüllungsbahn. Die Einrichtung weist einen optischen Sensor, einen Ultraschallsensor und/oder einen Sensor zur Erkennung elektromagnetischer Wellen oder Felder auf. Der Sensor ist auf die Umhüllungsbahn zwischen dem Bahnvorrat und dem Erntegutballen gerichtet. Er ist dazu vorgesehen, ein Durchlaufen oder Fehlen der Umhüllungsbahn anhand seiner licht- oder ultraschallreflektierenden oder elektromagnetischen Eigenschaften zu erkennen. Allerdings kann die Erfassung eines Umhüllungsbahnrisses oder Umhüllungsbahnendes bei Nutzung eines solchen Sensors durch Licht- und Schmutzverhältnisse beeinträchtigt sein. Zudem kann aufgrund der Vielzahl verschiedener Arten von Umhüllungsbahnen eine Abstimmung des Sensors auf die Art der Umhüllungsbahn erforderlich sein. Auch ist die Verwendung mehrerer, insbesondere verschiedener Sensoren, aufwändig und kostspielig.

Aufgabe der vorliegenden Erfindung ist es, eine landwirtschaftliche Arbeitsmaschine bereitzustellen, die die Erfassung einer solchen Umhüllungsstörung für Umhüllungsbahnen unterschiedlichster Ausprägung kostengünstig und sicher gewährleistet.

Die Aufgabe wird gelöst mit einer landwirtschaftliche Arbeitsmaschine mit den Merkmalen des unabhängigen Patentanspruchs 1 sowie einem Verfahren zum Betreiben einer landwirtschaftlichen Arbeitsmaschine mit den Merkmalen des unabhängigen Patentanspruchs 11. Vorteilhafte Ausführungsformen sind den abhängigen Ansprüchen entnehmbar.

Dafür wird eine landwirtschaftliche Arbeitsmaschine geschaffen. Die Arbeitsmaschine ist zum Umhüllen eines Erntegutballens vorgesehen. In einer bevorzugten Ausführungsform ist die landwirtschaftliche Arbeitsmaschine ein Ballenwickler. In dieser Ausführungsform ist sie zum Umhüllen landwirtschaftlicher Erntegutballen ausgebildet. Dafür nimmt sie die landwirtschaftlichen Erntegutballen vom Boden auf und legt sie nach dem Umhüllen wieder auf den Boden ab. Die Erfindung umfasst aber auch Ballenpressen, die als Press- und Wickelkombination sowohl zum Pressen als auch zum anschließenden Umhüllen von Erntegutballen vorgesehen sind. In der Regel sind Ballenwickler oder Ballenpressen als gezogene landwirtschaftlichen Arbeitsmaschinen ausgebildet und an einen Schlepper anhängbar. Die Erfindung umfasst aber auch selbstfahrende Ballenwickler oder Ballenpressen. In der Ausführungsform eines Ballenwicklers kann dieser auch an einen Schlepper front- und/oder heckseitig anbaubar ausgebildet sein, insbesondere an einen Dreipunktkraftheber des Schleppers.

Die landwirtschaftliche Arbeitsmaschine umfasst einen Rahmen, einen Wickelarm, der zum Umhüllen des Erntegutballens relativ zum Rahmen um eine Wickelachse drehbar ist, und zumindest eine stationär am Wickelarm angeordnete Rolle.

Der Rahmen bildet die tragende Struktur der landwirtschaftlichen Arbeitsmaschine. Er ist zum Tragen von Baugruppen der landwirtschaftlichen Arbeitsmaschine vorgesehen. Dafür umfasst er tragende Bauteile, die durch Verschweißen, Verschrauben oder andere Verbindungsmittel zusammengefügt sein können.

Bevorzugt ist am Rahmen der landwirtschaftlichen Arbeitsmaschine ein Wickelarmantrieb angeordnet, der eine Wickelarmwelle umfasst, die zum Antreiben des Wickelarms vorgesehen ist. Der Wickelarmantrieb kann Triebmittel wie beispielsweise Gelenkwellen, Getriebe oder ähnlich aufweisen. Zum Antreiben des Wickelarms steht dieser bevorzugt in Wirkverbindung mit der Wickelarmwelle des Wickelarmantriebs, und/oder der Wickelarm ist zumindest mittelbar drehfest an der Wickelarmwelle angeordnet. Dadurch ist er durch Antreiben der Wickelarmwelle relativ zum Rahmen um die Wickelachse drehbar. Die Wickelachse ist bei eben angeordneter landwirtschaftlicher Arbeitsmaschine bevorzugt vertikal ausgerichtet. Prinzipiell kann sie jedoch auch in einem Winkel dazu ausgerichtet sein.

Die Rolle ist stationär am Wickelarm angeordnet, so dass sie sich beim Drehen des Wickelarms mit diesem um die Wickelachse dreht. Sie ist relativ zum Wickelarm um eine Rollenachse drehbar und dazu vorgesehen, mit der Umhüllungsbahn zusammenzuwirken. Die Umhüllungsbahn wird zum Umhüllen des Erntegutballens genutzt. Sie wird beim Umwickeln des Erntegutballens von einem Bahnvorrat abgezogen. Dabei wirken die Rolle und die Umhüllungsbahn bevorzugt so miteinander zusammen, dass die Rolle durch das und/oder bei dem Abziehen der Umhüllungsbahn um die Rollenachse gedreht wird.

Der Erntegutballen ist beim Umhüllen bevorzugt etwa fluchtend zur Wickelachse angeordnet. Dadurch werden der Wickelarm, und mit ihm die Rolle und/oder der Bahnvorrat, beim Drehen des Wickelarms um die Wickelachse um den Erntegutballen herum gedreht. Dabei wird die Umhüllungsbahn vom Bahnvorrat abgezogen und um den Erntegutballen herum geführt, so dass dieser umhüllt wird.

Der Wickelarm ist dafür bevorzugt auskragend ausgebildet, so dass er beim Drehen um die Wickelachse und den Erntegutballen nicht mit dem Erntegutballen kollidiert. Dafür kann er beispielsweise L-förmig oder bogenförmig ausgebildet sein.

Bei dem Erntegutballen handelt es sich um einen durch eine insbesondere landwirtschaftliche Presseinrichtung gepressten Ballen aus Erntegut. Er kann in Bezug auf seine Größe und/oder Form unterschiedlich ausgebildet sein, insbesondere als zylindrischer Rundballen oder als Quaderballen.

Beim Umhüllen besteht die Gefahr, dass die Umhüllungsbahn reißt. Weiterhin kann eine Umhüllungsbahn während des Umhüllens eines Erntegutballens aufgebraucht werden. Um eine solche Umhüllungsstörung, insbesondere einen solchen Umhüllungsbahnriss oder ein solches Umhüllungsbahnende, zu erfassen, weist die landwirtschaftliche Arbeitsmaschine einen Sensor auf. Der Sensor ist zum Messen einer beim Umhüllen des Erntegutballens auf ihn wirkenden Belastung vorgesehen.

Die landwirtschaftliche Arbeitsmaschine zeichnet sich dadurch aus, dass der Sensor stationär an der zumindest einen Rolle angeordnet ist. Dadurch dreht sich der Sensor beim Drehen des Wickelarms mit diesem um die Wickelachse. Weiterhin wird der Sensor beim Drehen der Rolle mit dieser um die Rollenachse gedreht. Der Sensor folgt daher zudem den Bewegungen der Rolle. Die auf den Sensor wirkende Belastung kann daher als ein Maß für eine auf die Rolle wirkende Belastung genutzt werden.

Jede am Wickelarm stationär angeordnete Rolle, die durch das Abziehen der Umhüllungsbahn von dem Materialvorrat in Drehung versetzbar ist, ist als die zumindest eine Rolle verwendbar. Die zumindest eine Rolle kann beispielsweise eine zum Umlenken der Umhüllungsbahn genutzte Umlenkrolle sein. Prinzipiell kann auch eine die Umhüllungsbahn bildende Vorratsrolle als die zumindest eine Rolle genutzt werden. In dieser letztgenannten Ausführungsform kann zum Anbringen des Sensors an der Vorratsrolle ein Hilfsmittel genutzt werden, welches insbesondere einen gleichbleibenden Abstand des Sensors von der Rollenachse gewährleistet.

Die zumindest eine Rolle ist aber in einer bevorzugten Ausführungsform eine Tragrolle, die zum Tragen des die Umhüllungsbahn bildenden Bahnvorrats vorgesehen ist. Als Bahnvorrat wird in der Regel eine Vorratsrolle genutzt, die an der Tragrolle austauschbar angeordnet ist. Die Vorratsrolle ist bevorzugt form- und/oder kraftschlüssig an der Tragrolle angeordnet, so dass sich die Tragrolle beim Abziehen der Umhüllungsbahn von der Vorratsrolle mit dieser dreht. Die Rollenachse ist dafür bevorzugt parallel zum Wickelarm angeordnet, so dass der Wickelarm die Vorratsrolle beim Drehen nicht behindert, und die Umhüllungsbahn leicht von der Vorratsrolle abziehbar ist.

In einer alternativen bevorzugten Ausführungsform ist die zumindest eine Rolle eine Vorstreckrolle zum Vorstrecken der Umhüllungsbahn. Dabei sind am Wickelarm bevorzugt zwei Vorstreckrollen zum Hindurchführen der Umhüllungsbahn zwischen diesen angeordnet. Die Vorstreckrollen sind der Tragrolle bevorzugt in eine Abziehrichtung der Umhüllungsbahn von der Vorratsrolle nachgeordnet. Vorzugsweise sind die beiden Vorstreckrollen jeweils um eine Vorstreckrollenachse in entgegen gesetzte Drehrichtungen drehbar, wobei die Vorstreckrollenachsen parallel zueinander angeordnet sind. Die Umhüllungsbahn ist beim Umhüllen des Erntegutballens zwischen den Vorstreckrollen hindurchgeführt. Dabei liegt die Umhüllungsbahn an beiden Vorstreckrollen an, so dass diese beim Abziehen der Umhüllungsbahn jeweils um ihre Vorstreckrollenachse gedreht werden. Um eine Vorstreckung der Umhüllungsbahn zu bewirken, werden die beiden Vorstreckrollen dabei mit unterschiedlichen Geschwindigkeiten gedreht. Durch die Vorspannung wird die Umhüllungsbahn gedehnt. Dadurch ist der Materialverbrauch verringert. Zudem wird die Umhüllungsbahn dadurch mit einer Vorspannung auf den Erntegutballen aufgebracht und die aufgebrachte Umhüllungsbahn liegt am Erntegutballen an. Dadurch ist ein luftdichtes Verpacken des Erntegutballens mit einer als Folie ausgebildeten Umhüllungsbahn erreichbar. Weiterhin ist dadurch ein formstabiler Erntegutballen erhältlich.

Die Rolle ist bevorzugt zylinderförmig oder kegelförmig ausgebildet. Dafür weist sie bevorzugt eine zylinderförmige oder kegelförmige Mantelfläche auf. Die Mantelfläche erstreckt sich bevorzugt in eine Längsrichtung. Weiterhin bevorzugt weist sie wenigstens eine Grundfläche auf. Die Grundfläche kann sich in einem Winkel, insbesondere quer zur Mantelfläche erstrecken. Vorzugsweise ist sie an einem Ende der Mantelfläche angeordnet. Ebenso bevorzugt weist die Rolle zwei, insbesondere an einander gegenüberliegenden Enden der Mantelfläche angeordnete, Grundflächen auf. Die beiden Grundflächen können die Rolle in Längsrichtung begrenzen. In einer bevorzugten Ausführungsform ist der Sensor an der zumindest einen Grundfläche, oder an einer der Grundflächen, der Rolle angeordnet. Dadurch kommt er nicht in Kontakt mit der Umhüllungsbahn. Ebenfalls bevorzugt ist er dafür innerhalb der Rolle angeordnet.

Der Sensor ist bevorzugt als ein Kraftsensor und zur Erfassung einer auf ihn wirkenden Kraft, insbesondere der auf ihn wirkenden Fliehkraft, ausgebildet. In einer ebenso bevorzugten Ausführungsform ist er als ein Beschleunigungssensor ausgebildet, und zur Erfassung einer auf ihn wirkenden Beschleunigung vorgesehen. Dadurch ist mit dem Sensor eine bei Drehung des Wickelarms und/oder Drehung der Rolle auf ihn wirkende (Flieh-) Kraft messbar. Bei einer Umhüllungsbahnstörung, insbesondere einem Umhüllungsbahnriss oder einem Umhüllungsbahnende, wird die Rolle nicht mehr gedreht, so dass sich die auf den Sensor wirkende Fliehkraft entsprechend verändert, insbesondere verringert.

Beim Umhüllen des Erntegutballens wird die Umhüllungsbahn von dem Bahnvorrat abgezogen, wobei sich die Rolle dreht. Dabei ist ein Durchmesser der Rolle in der Regel klein gegenüber einem Abstand des Wickelarms von der Wickelachse. Die Rolle wird daher mit einer erheblich größeren Drehgeschwindigkeit gedreht als der Wickelarm. Da sich die Rolle beim Auftreten einer solchen Umhüllungsstörung nicht mehr dreht, verändert, insbesondere verringert, sich die Fliehkraft beim Auftreten einer Umhüllungsstörung sprungartig.

In einer besonders bevorzugten Ausführungsform kann der Sensor zudem außermittig an der Rolle angeordnet sein. Das heißt, dass er bevorzugt von der Rollenachse, insbesondere in radialer Richtung, beabstandet ist. Dabei kann er in einer bevorzugten Ausführungsform außermittig an der Grundfläche angeordnet sein. Aufgrund der außermittigen Anordnung des Sensors ändert sich bei dieser Ausführungsform die auf den Sensor wirkende Belastung mit dem Drehwinkel der Rolle.

Dabei ist der Sensor weiterhin bevorzugt dazu ausgebildet, insbesondere nur, die in radialer Richtung zur Rollenachse wirkende Belastung zu messen. Dafür erstreckt sich (die) eine Messrichtung des Sensors bevorzugt radial zur Rollenachse. Der bei dieser Ausführungsform genutzte Sensor erfasst daher eine in tangentialer Richtung auf den Sensor wirkende Belastung nicht. Der hierzu erforderliche Sensor ist kostengünstiger als Sensoren, die die Belastung auch in tangentialer Richtung messen.

Aufgrund der außermittigen Anordnung des Sensors an der Rolle ändert sich eine Ausrichtung des Sensors bezüglich der Wickelachse. Die außermittige Anordnung des Sensors bewirkt daher, dass sich der in radialer Messrichtung auf den Sensor wirkende und von ihm gemessene radiale Anteil der Belastung während einer Umdrehung der Rolle um ihre Rollenachse insbesondere sinusförmig ändert. Die von einem solchen, außermittig an der Rolle positionierten Sensor gemessene Belastung oszilliert daher während des Abziehens der Umhüllungsbahn und/oder während des Umhüllens des Erntegutballens, insbesondere sinusförmig. Die Belastung kann allerdings durch äußere Störeinflüsse wie beispielsweise Vibrationen der Arbeitsmaschine, insbesondere aufgrund von Bodenunebenheiten, durch Unwuchten der Arbeitsmaschine oder an Bauteilen der Arbeitsmaschine, oder durch fahrdynamische Einflüsse beeinflusst sein, die dem sinusförmigen Signalverlauf der vom Sensor gemessenen Belastung überlagert sind. Da sich die Rolle beim Auftreten einer Umhüllungsstörung nicht mehr dreht, entfällt dann dieser oszillierende Belastungsanteil.

In einer besonders bevorzugten Ausführungsform weist die Arbeitsmaschine eine Auswerteeinheit auf, die zum Erfassen einer Umhüllungsstörung eingerichtet ist. Vorzugsweise erfasst die Auswerteeinheit die Umhüllungsstörung, wenn sich die Belastung sprungartig ändert und/oder wenn der oszillierende Belastungsanteil entfällt. Da sowohl die sprungartige Änderung der Belastung als auch der Wegfall des oszillierenden Belastungsanteils die Umhüllungsstörung anzeigen, ist ihre Erfassung, auch bei Beeinflussung der Belastung durch äußere Störeinflüsse, sicher gewährleistet.

Dabei ist die Auswerteeinheit bevorzugt dazu eingerichtet, beim Erfassen der Umhüllungsstörung ein Fehlersignal, insbesondere an einen Bediener der landwirtschaftlichen Arbeitsmaschine, auszugeben. Vorzugsweise weist die Auswerteeinheit dafür eine Bedienerschnittstelle wie beispielsweise ein Display oder ein Terminal auf, oder ist mit einer Bedienerschnittstelle signalübertragend verbunden, beispielsweise mit einem mobilen Gerät, insbesondere einem Handy, einem Tablet oder ähnlich. Der Bediener kann dann unmittelbar auf die Umhüllungsstörung reagieren und das Umhüllen des Erntegutballens, beispielsweise durch erneutes Befestigen der Umhüllungsbahn am Erntegutballen oder durch Einlegen einer neuen Vorratsrolle, sicherstellen.

Der Sensor weist bevorzugt eine (eigene) Spannungsversorgung auf. Dadurch kann er autark betrieben werden. Als Spannungsversorgung kommen beispielsweise Batterien in Frage. Aufgrund des sehr geringen Stromverbrauchs eines solchen batteriebetriebenen Sensors ist eine Betriebsdauer über mehrere Jahre möglich. Prinzipiell ist die Spannungsversorgung aber auch kabelgebunden möglich.

Weiterhin ist es bevorzugt, dass der Sensor zur drahtlosen Signalübertragung ausgebildet ist. Dadurch kann die vom Sensor gemessene Belastung drahtlos an die Auswerteeinheit übertragen werden. Prinzipiell ist aber auch die Signalübertragung vom Sensor zur Auswerteeinheit kabelgebunden möglich.

Dabei kann auch eine von der Arbeitsmaschine entfernte Auswerteeinheit genutzt werden, die beispielsweise auf einem mobilen Gerät wie einem Handy, Tablet oder ähnlich angeordnet ist. In dieser Ausführungsform kann die Auswerteeinheit als Computerprogrammprodukt, insbesondere in Form einer App, vorliegen.

Für die drahtlose Signalübertragung können beispielsweise Funk, WLAN, Bluetooth oder ähnlich genutzt werden, je nachdem, wo die Auswerteeinheit positioniert ist.

In einer bevorzugten Ausführungsform umfasst die landwirtschaftliche Arbeitsmaschine zumindest einen zweiten Wickelarm, an dem zumindest eine weitere Rolle stationär angeordnet ist. Die weitere Rolle ist bevorzugt dazu vorgesehen, mit einer zweiten Umhüllungsbahn zusammen zu wirken, so dass sie sich, insbesondere durch Abziehen der zweiten Umhüllungsbahn von einem zweiten Bahnvorrat, relativ zum zweiten Wickelarm um ihre Rollenachse dreht. Vorzugsweise ist ein zweiter Sensor stationär, insbesondere außermittig, an der weiteren Rolle angeordnet und zur Erfassung der auf die weitere Rolle wirkenden Belastung ausgebildet. Zudem kann die landwirtschaftliche Arbeitsmaschine auch noch weitere Wickelarme mit stationär an ihnen angeordneten weiteren Rollen für weitere Umhüllungsbahnen umfassen, sowie weitere, für die Erfassung der Umhüllungsstörung einer der weiteren Umhüllungsbahnen vorgesehene Sensoren. Die Auswerteeinheit ist bevorzugt dazu eingerichtet, eine Umhüllungsstörung der zweiten Umhüllungsbahn und/oder der weiteren Umhüllungsbahnen in Abhängigkeit von der auf den zweiten Sensor wirkenden Belastung und/oder der auf die weiteren Sensoren wirkenden Belastung in analoger Weise wie beschrieben zu erfassen.

Der Sensor ist auch an einer herkömmlichen, insbesondere älteren, landwirtschaftlichen Arbeitsmaschine nachrüstbar. Dadurch kann sichergestellt werden, dass auch Bediener älterer landwirtschaftlicher Arbeitsmaschinen von einer Umhüllungsstörung beim Umhüllen eines Erntegutballens benachrichtigt werden. Dabei ist das Ausrüsten oder Nachrüsten einer landwirtschaftlichen Arbeitsmaschine mit dem Sensor sehr kostengünstig möglich. Die Erfassung der Umhüllungsstörung ist mit dem Sensor unabhängig von Eigenschaften der Umhüllungsbahn, und auch von Lichtverhältnissen und/oder einer Umgebungsbelastung durch Schmutz möglich.

Die Aufgabe wird weiterhin gelöst mit einem Verfahren zum Betreiben einer solchen landwirtschaftlichen Arbeitsmaschine. Bei dem Verfahren wird ein Erntegutballen beim Drehen des Wickelarms um die Wickelarmachse mit einer Umhüllungsbahn umhüllt, wobei die Rolle mit der Umhüllungsbahn zusammenwirkt, so dass sie sich, insbesondere beim Abziehen der Umhüllungsbahn vom Bahnvorrat, relativ zum Wickelarm um ihre Rollenachse dreht, wobei der Sensor die auf ihn wirkende Belastung misst, und die Auswerteeinheit die Umhüllungsstörung erfasst, wenn sich die Belastung sprungartig ändert und/oder wenn ein oszillierender Belastungsanteil entfällt.

Da sich der Sensor mit der Rolle dreht, gewährleistet das Verfahren eine zuverlässige Erfassung einer Umhüllungsstörung, bei der sich die Rolle nicht mehr dreht, und ermöglicht eine sehr schnelle Benachrichtigung des Bedieners der landwirtschaftlichen Arbeitsmaschine. Dadurch kann der Bediener sehr schnell reagieren und können fehlerhaft umhüllte Erntegutballen vermieden werden.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine landwirtschaftliche Arbeitsmaschine gemäß der Erfindung in einer perspektivischen Ansicht;
- Fig. 2: in (a) schematisch einen Ausschnitt aus der landwirtschaftlichen Arbeitsmaschine der Fig. 1, und in (b)-(c) jeweils einen Ausschnitt aus einer weiteren Ausführungsform der landwirtschaftlichen Arbeitsmaschine, jeweils in einer vergrößerten Ansicht von oben;
- Fig. 3: schematisch einen Verlauf einer von einem Sensor der landwirtschaftlichen Arbeitsmaschine gemessenen Belastung über die Zeit.

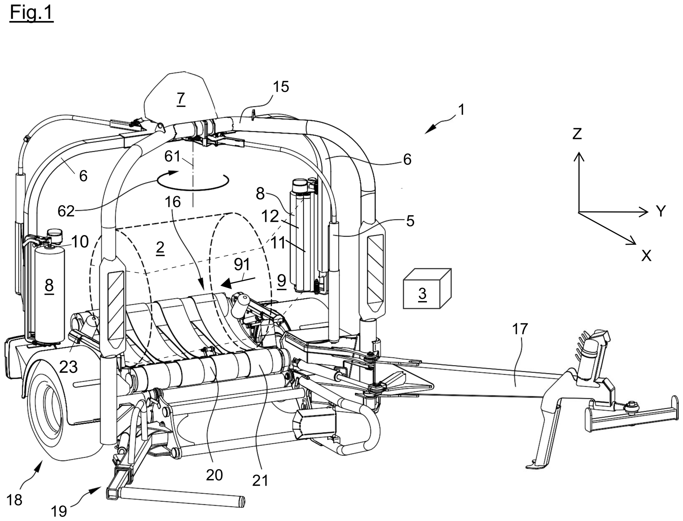

Fig. 1 zeigt eine Ausführungsform einer erfindungsgemäßen landwirtschaftlichen Arbeitsmaschine 1 zum Umhüllen eines Erntegutballens 2 mit einer Umhüllungsbahn 9. Die landwirtschaftliche Arbeitsmaschine 1 ist hier ein Ballenwickler und in der Art einer gezogenen landwirtschaftlichen Arbeitsmaschine 1 ausgeführt, die ein eigenes Fahrwerk mit Rädern 18 aufweist, mit denen sie sich vom Boden abstützt, und die an einen Schlepper (nicht dargestellt) anhängbar ist. Dafür weist sie eine bezüglich einer Längsachse X der landwirtschaftlichen Arbeitsmaschine 1 vorderseitig eine Deichsel 17 auf. Im Folgenden werden die Begriffe landwirtschaftliche Arbeitsmaschine 1 und Ballenwickler synonym verwendet. Die Erfindung umfasst aber auch Ballenpressen in Form von Press- und Wickelkombinationen, die sowohl zum Pressen als auch zum Umhüllen von Erntegutballen 2 vorgesehen sind. Zudem umfasst die Erfindung auch als selbstfahrende landwirtschaftliche Arbeitsmaschine ausgebildete Ballenwickler oder Ballenpressen.

Die landwirtschaftliche Arbeitsmaschine 1 weist einen Rahmen 15 auf, der eine Struktur der landwirtschaftlichen Arbeitsmaschine bildet, und der Baugruppen und/oder Aggregate der landwirtschaftlichen Arbeitsmaschine 1 trägt.

Am Rahmen 15 ist eine Hebeeinrichtung 19 angeordnet, die dazu eingerichtet ist, den Erntegutballen 2 vom Boden aufzunehmen. Die Hebeeinrichtung 19 weist dafür einen relativ zum Rahmen 15 schwenkbaren und/oder höhenverstellbaren Hebearm (nicht bezeichnet) auf.

Weiterhin weist die landwirtschaftliche Arbeitsmaschine 1 einen Wickeltisch 16 auf, auf dem der Erntegutballen 2 beim Umhüllen abgelegt ist. Der Wickeltisch 16 ist etwa mittig des Ballenwicklers 1 angeordnet. Er umfasst eine relativ zum Rahmen 15 um eine Antriebsachse (nicht gezeigt) drehbare Antriebsrolle 20, die sich in eine Querrichtung Y der landwirtschaftlichen Arbeitsmaschine 1 erstreckt. Die Querrichtung Y erstreckt sich quer zur Längsrichtung X. Die Antriebsrolle 20 treibt eine Mehrzahl Endlosbänder 21 an, die sich von der Antriebsrolle 20 zu einer parallel zur Antriebsrolle 20 angeordneten Laufrolle (nicht bezeichnet) erstrecken. Der Erntegutballen 2 liegt auf den Endlosbändern 21 auf und wird bei Antrieb der Antriebsrolle 20 um eine Erstreckungsachse (nicht gezeigt) des Erntegutballens 2 gedreht, die sich parallel zur Querrichtung Y erstreckt.

Die landwirtschaftliche Arbeitsmaschine 1 ist zum Umhüllen des Erntegutballens 2 mit wenigstens einer Umhüllungsbahn 9 vorgesehen. Dafür weist sie in der hier gezeigten Ausführungsform zwei Wickelarme 6 auf. An jedem der Wickelarme 6 ist jeweils stationär eine Rolle in Form einer Tragrolle 10 angeordnet, die einen Bahnvorrat 8 trägt. Der Bahnvorrat 8 liegt jeweils als Vorratsrolle vor. Im Folgenden werden die Begriff Bahnvorrat 8 und Vorratsrolle synonym verwendet. Auf der Vorratsrolle 8 bildet die Umhüllungsbahn 9, so dass diese von der Vorratsrolle 8 abziehbar ist. Das Abziehen der Umhüllungsbahn 9 und das Umhüllen des Erntegutballens 2 ist in Fig. 1 durch eine gestrichelte Linie für einen der Wickelarme 6 und/oder Umhüllungsbahnen 9 schematisch dargestellt. Die landwirtschaftliche Arbeitsmaschine 1 ist aber dazu eingerichtet, den Erntegutballen 2 mit bis zu zwei Umhüllungsbahnen 9 gleichzeitig zu umhüllen. Jedem Wickelarm 6 ist daher eine Tragrolle 10 mit einer die Umhüllungsbahn 9 bildenden Vorratsrolle 8 zugeordnet. Im Folgenden wird die Erfindung anhand eines der Wickelarme 6 beschrieben. Die Beschreibung ist analog auf den zweiten Wickelarm 6 anwendbar.

Der Wickelarm 6 ist relativ zum Rahmen 15 um eine Wickelachse 61, die sich in eine Hochrichtung Z der landwirtschaftlichen Arbeitsmaschine 1 erstreckt, in eine Drehrichtung 62 drehbar vorgesehen. Die Hochrichtung Z erstreckt sich quer zur Längsrichtung X und quer zur Querrichtung Y. Zum Antreiben des Wickelarms 6 ist am Rahmen 15 oberhalb des Wickeltisches 16 von diesem beabstandet ein Wickelarmantrieb 7 angeordnet. Der Wickelarm 6 ist an einer Seite (nicht bezeichnet) des Wickelarmantriebs 7 angeordnet. Er ist auskragend ausgebildet und weist eine etwa L-förmig Form auf. Dadurch erstreckt er sich zumindest bereichsweise etwa parallel zur Wickelachse 61. Bei Drehen des Wickelarms 6 um die Wickelachse 61 wird dieser um den Wickeltisch 16 und um einen auf dem Wickeltisch 16 abgelegten Erntegutballen 2 gedreht. In Fig. 1 ist der auf dem Wickeltisch 16 gelagerte Erntegutballen 2 in gestrichelten Linien angedeutet.

Dem Wickelarm 6 in seiner Drehrichtung 62 vorlaufend angeordnet weist die landwirtschaftliche Arbeitsmaschine 1 einen Schaltarm 5 auf, der dazu ausgebildet ist, bei Kontakt zu einer Person oder ein Hindernis auszuweichen und das Drehen des Wickelarms 6 unmittelbar zu beenden.

Weiterhin weist die landwirtschaftliche Arbeitsmaschine 1 eine Klemmvorrichtung 23 auf, die dazu ausgebildet ist, zu Beginn des Umhüllens des Erntegutballens 2 die Umhüllungsbahn 9 solange einzuklemmen, bis der Erntegutballen 2 weit genug mit der Umhüllungsbahn 9 umhüllt ist, so dass sich diese nicht mehr vom Erntegutballen 2 lösen kann.

Zum Umhüllen des Erntegutballens 2 wird der Wickelarm 6 um die Wickelachse 61 gedreht. Dabei wird die Umhüllungsbahn 9 von ihrer Vorratsrolle 8 abgezogen und um den Erntegutballen 2 herumgewickelt, so dass dieser mit der Umhüllungsbahn 9 umhüllt wird. Da sich der Erntegutballen 2 bei gleichzeitig angetriebenem Wickeltisch16 zudem um seine Erstreckungsachse dreht, wird er dabei allseitig, insbesondere luftdicht, umhüllt.

Die die Vorratsrolle 8 tragende Tragrolle 10 ist stationär an dem ihr zugeordneten Wickelarm 6 angeordnet. Sie wird daher beim Drehen ihres Wickelarms 6 mit diesem um die Wickelachse 61 gedreht. Zudem ist die Tragrolle 10 um eine Rollenachse 101, die sich parallel zur Wickelachse 61 erstreckt, drehbar. Die Vorratsrolle 8 ist form- und/oder kraftschlüssig an der Tragrolle 10 angeordnet. Daher wird die Tragrolle 10 beim Abziehen der Umhüllungsbahn 9 von der Vorratsrolle 8 mit dieser um die Rollenachse 101 der Tragrolle 10 gedreht.

Jedem Wickelarm 6 ist zudem ein Paar parallel zueinander angeordneter Vorstreckrollen 11, 12 zugeordnet, die stationär an dem Wickelarm 6 angeordnet sind. Die Umhüllungsbahn 9 der an dem Wickelarm 6 angeordneten Vorratsrolle 8 ist zwischen den Vorstreckrollen 11, 12 hindurchgeführt. Dabei sind die Vorstreckrollen 11, 12 der den Bahnvorrat 8 tragenden Tragrolle 10 in eine Abziehrichtung 91 der Umhüllungsbahn 9 vom Bahnvorrat 8 nachgeordnet.

Die Vorstreckrollen 11, 12 sind zum Vorstrecken der zwischen ihnen hindurchgeführten Umhüllungsbahn 9 vorgesehen. Sie sind jeweils um eine Vorstreckrollenachse 111, 121 drehbar, die sich parallel zueinander und parallel zur Wickelachse 61 erstrecken. Die Vorstreckrollen 11, 12 sind zudem in entgegen gesetzte Drehrichtungen 112, 122 drehbar und werden mit unterschiedlichen Geschwindigkeiten gedreht. Dafür ist eine erste der beiden Vorstreckrollen 11, 12 am Wickelarm 6 so gelagert, dass sie mit derselben Geschwindigkeit angetrieben wird, wie die die Umhüllungsbahn 9 bildende Vorratsrolle 8. Zudem ist an den Vorstreckrollen 11, 12 jeweils ein Zahnrad 113, 123 drehfest angeordnet. Die Zahnräder 113, 123 der Vorstreckrollen 11, 12 eines Paares weisen eine unterschiedliche Paarung 14 auf und kämmen miteinander. Dadurch wird die zweite Vorstreckrolle 12 während des Abziehens der Umhüllungsbahn 9 von der Vorratsrolle 8 mit einer anderen Geschwindigkeit gedreht als die erste Vorratsrolle 11. Dies bewirkt die Vorstreckung der Umhüllungsbahn 9. Durch die Vorstreckung wird die Umhüllungsbahn 9 gedehnt, und kann mit einer Vorspannung auf den Erntegutballen 2 aufgebracht werden, so dass sie am Erntegutballen 2 dicht anliegt.

Beim Umhüllen besteht die Gefahr, dass die Umhüllungsbahn 9 reißt, oder während des Umhüllens eines Erntegutballens 2 aufgebraucht wird. Um eine solche Umhüllungsstörung zu erfassen, weist die landwirtschaftliche Arbeitsmaschine 1 für die Umhüllungsbahn 9 einen Sensor 13 auf. Der Sensor 13 ist zum Messen einer beim Umhüllen des Erntegutballens 3 auf ihn wirkenden Belastung ausgebildet.

Der Sensor 13 ist stationär an einer Rolle 10, 11, 12 angeordnet, wobei die Rolle 10, 11, 12 ihrerseits stationär an dem Wickelarm 6 angeordnet ist. Weiterhin ist die Rolle 10, 11, 12 um die Rollenachse 101, 111, 121 drehbar. Dadurch wird der Sensor 13 sowohl mit dem Wickelarm 6 um die Wickelachse 61 als auch mit der Rolle 11, 12, 13 um die Rollenachse 101, 111, 121 gedreht.

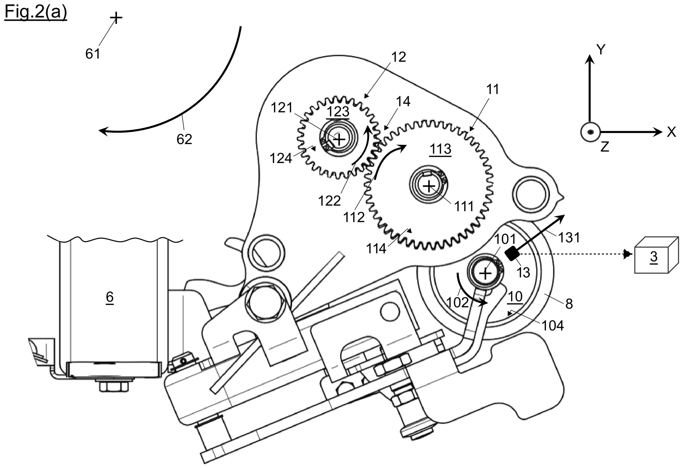

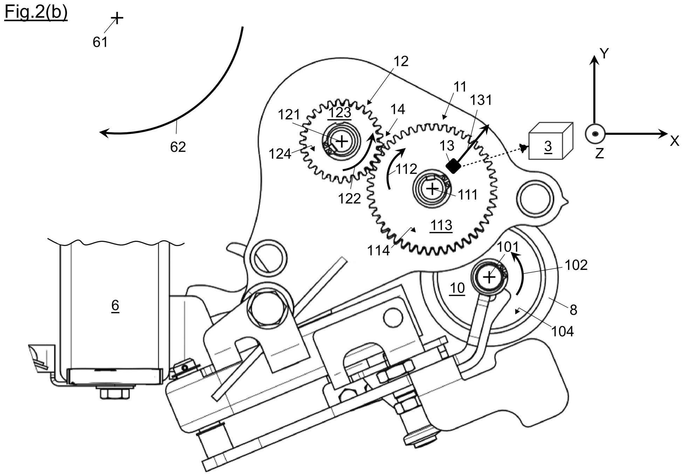

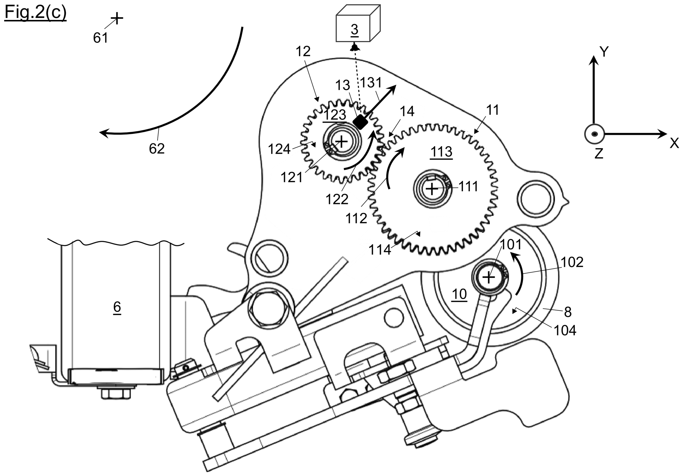

In Fig. 2 (a) ist als Rolle die Tragrolle 10, in Fig. 2 (b) die erste Vorstreckrolle 11 und in Fig. 2 (c) die zweite Vorstreckrolle 12 zum Anordnen des Sensors 13 gewählt. Die folgenden Erläuterungen gelten in analoger Weise für jede dieser Ausführungsformen. Die Erfindung wird aber nur anhand der Fig. 2 (a) beschrieben. Um die Gültigkeit für alle drei Ausführungsformen zu verdeutlichen, wird dabei anstelle des Begriffs Tragrolle 10 der Begriff Rolle genutzt.

Um eine Umhüllungsstörung, das heißt einen Umhüllungsbahnriss oder ein Umhüllungsbahnende, zu erfassen, weist die landwirtschaftliche Arbeitsmaschine 1 eine Auswerteeinheit 3 auf. Die Auswerteeinheit ist in den Figuren nur schematisch dargestellt. Sie ist mit dem Sensor 13 über eine kabellose Signalübertragung verbunden. Dies ist hier durch einen gestrichelten Pfeil angedeutet.

Die Rolle 10 ist zylinderförmig ausgebildet und weist eine zylinderförmige Mantelfläche (nicht bezeichnet) auf. An gegenüberliegenden Enden der Mantelfläche weist sie jeweils eine Grundfläche 104 auf, die sich in einem rechten Winkel zur Mantelfläche erstreckt. Der Sensor 13 ist an einer der Grundflächen 104 der Rolle 10 angeordnet. Er ist hier außermittig positioniert, das heißt er ist von der Rollenachse 101 der Rolle 10 beabstandet angeordnet.

Der Sensor 13 erfasst die auf ihn wirkende Belastung. Mit ihm ist die auf ihn wirkende Fliehkraft messbar. Die Messrichtung 131 des Sensors 13 ist eine radiale Richtung zur Rollenachse 101, da die Fliehkraft eine in radialer Richtung nach außen wirkende Kraft ist. Der Sensor 13 misst daher hier nur den auf ihn wirkenden radialen Belastungsanteil. Ein auf ihn wirkender tangentialer Belastungsanteil wird nicht von ihm erfasst. Dadurch entspricht die vom Sensor 13 gemessene Belastung hier nur dem in die radiale Richtung auf ihn wirkenden Belastungsanteil. Der Sensor 13 kann als ein Kraftsensor oder als ein Beschleunigungssensor ausgebildet sein. In der Ausbildung als Beschleunigungssensor misst er die Beschleunigung als Maß für die Fliehkraft. In analoger Weise wie der hier beschriebene Kraftsensor misst auch ein solcher Beschleunigungssensor nur die in radialer Richtung gerichtete Beschleunigung, wenn seine Messrichtung 131 die radiale Richtung ist. Prinzipiell sind hier aber auch in mehrere Messrichtungen messende Sensoren nutzbar.

Bei einem störungsfreien Umhüllen des Erntegutballens 2 wird die Umhüllungsbahn 9 ungestört von dem Bahnvorrat 8 abgezogen. Bei einer Umhüllungsbahnstörung, bei der sich die Rolle 10 nicht mehr dreht, verringert sich die auf den Sensor 13 wirkende Fliehkraft. Da sich die Rolle 10 beim Umhüllen des Erntegutballens 2 erheblich schneller als der Wickelarm 6, und bei Auftreten der Umhüllungsstörung nicht mehr dreht, verringert sich die auf den Sensor 13 wirkende Fliehkraft bei Auftreten der Umhüllungsbahnstörung sprungartig.

Aufgrund seiner außermittigen Anordnung an der Rolle 13 ändert sich die Fliehkraft zudem im störungsfreien Betrieb mit dem Drehwinkel der Rolle 10, da sich ein Abstand A des Sensors 13 von der Wickelachse 61 während einer Umdrehung der Rolle 10 ändert. Der radiale Belastungsanteil ändert sich bei einer Umdrehung der Rolle 10 dabei sinusförmig. Während des störungsfreien Umhüllens des Erntegutballens 2 oszilliert der radiale Belastungsanteil daher hin und her. Da sich die Rolle 10 beim Auftreten der Umhüllungsstörung nicht mehr dreht, entfällt dann dieser oszillierende Belastungsanteil.

Die Auswerteeinheit 3 ist dazu ausgebildet, die Umhüllungsstörung zu erfassen, wenn sich die Belastung sprungartig ändert und/oder wenn der oszillierende Belastungsanteil entfällt. Die Umhüllungsstörung kann einem Bediener der landwirtschaftlichen Arbeitsmaschine 1 unmittelbar angezeigt werden, damit dieser auf die Umhüllungsstörung reagieren und das Umhüllen des Erntegutballens 2 sicherstellen kann, beispielsweise durch erneutes Befestigen der Umhüllungsbahn 9 am Erntegutballen 2 oder durch Einlegen einer neuen Vorratsrolle 8.

Die Umhüllungsstörung kann dabei nur einen der beiden oder beide Wickelarme 6 betreffen. Falls sie nur einen der Wickelarme 6 betrifft, kann die vollständige Umhüllung des Erntegutballens 2 mit der Umhüllungsbahn 9 des anderen Wickelarms 6 zu Ende geführt werden. Dafür kann jedoch eine Reduzierung einer Drehgeschwindigkeit der Antriebsrolle 20 des Wickeltisches 12 erforderlich sein. Diese kann von einer Steuerungseinheit der landwirtschaftlichen Arbeitsmaschine 1 durchgeführt werden, wenn die Umhüllungsstörung angezeigt wird.

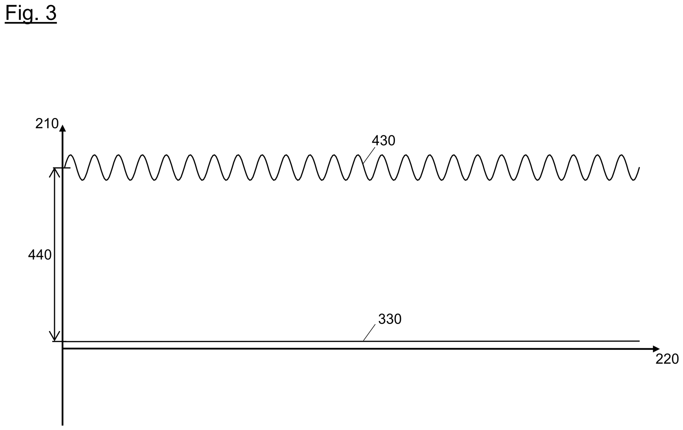

Fig. 3 zeigt schematisch die vom Sensor 13 gemessene Belastung im störungsfreien Betrieb und bei Auftreten der Umhüllungsstörung jeweils gegenüber der Zeit. Die Belastung ist auf der vertikalen Achse 210, die Zeit auf der horizontalen Achse 220 aufgetragen. Eine Änderung eines Durchmessers (nicht gezeigt) der Vorratsrolle 8 ist hier vernachlässigt.

Bei stehender Rolle 10, das heißt bei Auftreten der Umhüllungsstörung, entspricht die auf den Sensor 13 wirkende Belastung der aufgrund der Drehung des Wickelarms 6 auf den Sensor 13 wirkenden Fliehkraft. Diese ist bei gleichbleibender Drehgeschwindigkeit des Wickelarms 6 konstant. Der mit dem Sensor 13 gemessene radiale Belastungsanteil 330 ist aber abhängig von einer Position, in der der Sensor 13 relativ zu einer radialen Richtung zur Wickelachse 61 angeordnet ist. Sofern die Messrichtung 131 des Sensors 13 die radiale Richtung zur Wickelachse 61 ist, ist der gemessene Belastungsanteil "0" (nicht dargestellt).

Bei sich drehender Rolle 10, das heißt im störungsfreien Betrieb, wirkt auf den Sensor 13 eine erheblich größere Fliehkraft aufgrund der großen Drehgeschwindigkeit der Rolle 10. Die gemessene Belastung ist daher um einen entsprechenden Betrag 440 größer als bei Auftreten der Umhüllungsstörung. Zudem oszilliert der in Messrichtung 131 gemessene Belastungsanteil 430 aufgrund der außermittigen Anordnung des Sensors 13 an der Rolle 10.

Eine sprungartige Verringerung des gemessenen Belastung um den entsprechenden Betrag 440 und/oder das Wegfallen des oszillierenden Belastungsanteils 430 zeigt daher an, dass die Rolle 10 sich nicht mehr um ihre Rollenachse 101 dreht. Daraus kann die Auswerteeinheit 3 auf die Umhüllungsstörung schließen.

## Patentansprüche

1. Landwirtschaftliche Arbeitsmaschine (1) zum Umhüllen eines Erntegutballens (2), umfassend
• einen Rahmen (15),
• einen Wickelarm (6), der zum Umhüllen des Erntegutballens (2) relativ zum Rahmen (15) um eine Wickelachse (61) drehbar ist,
• zumindest eine stationär am Wickelarm (6) angeordnete Rolle (10, 11, 12), die relativ zum Wickelarm (6) um eine Rollenachse (101, 111, 121) drehbar ist, und die dazu vorgesehen ist, mit einer, insbesondere zum Umhüllen des Erntegutballens (2) genutzten, Umhüllungsbahn (9) zusammenzuwirken, und
• einem Sensor (13) zum Messen einer beim Umhüllen des Erntegutballens (2) auf die Rolle (10, 11, 12) wirkenden Belastung,
**dadurch gekennzeichnet, dass**
der Sensor (13) stationär an der zumindest einen Rolle (10, 11, 12) angeordnet ist.

2. Landwirtschaftliche Arbeitsmaschine (1) nach Anspruch 1, **dadurch gekennzeichnet, dass** der Sensor (13) außermittig an der Rolle (10, 11, 12) angeordnet ist.

3. Landwirtschaftliche Arbeitsmaschine (1) nach einem der vorherigen Ansprüche, **dadurch gekennzeichnet, dass** die Rolle (10, 11, 12) zylinderförmig oder kegelförmig ausgebildet ist und eine Grundfläche (104, 114, 124) aufweist, an der der Sensor (13) angeordnet ist.

4. Landwirtschaftliche Arbeitsmaschine (1) nach einem der vorherigen Ansprüche, **dadurch gekennzeichnet, dass** der Sensor (13) dazu ausgebildet ist, die Belastung in eine Messrichtung (131) zu messen, die sich radial zur Rollenachse (101, 111, 121) erstreckt.

5. Landwirtschaftliche Arbeitsmaschine (1) nach einem der vorherigen Ansprüche, **dadurch gekennzeichnet, dass** der Sensor (13) ein Kraftsensor und zur Erfassung einer auf die Rolle (10, 11, 12) wirkenden Kraft, insbesondere einer Fliehkraft, oder ein Beschleunigungssensor und zur Erfassung einer auf die Rolle (10, 11, 12) wirkenden Beschleunigung vorgesehen ist.

6. Landwirtschaftliche Arbeitsmaschine (1) nach einem der vorherigen Ansprüche, **dadurch gekennzeichnet, dass** sie eine Auswerteeinheit (3) umfasst, die zum Erfassen einer Umhüllungsstörung eingerichtet ist, wenn sich die Belastung sprungartig ändert und/oder wenn ein oszillierender Belastungsanteil (400) entfällt.

7. Landwirtschaftliche Arbeitsmaschine (1) nach einem der vorherigen Ansprüche, **dadurch gekennzeichnet, dass** die Auswerteeinheit (3) dazu eingerichtet ist, beim Erfassen der Umhüllungsstörung ein Fehlersignal auszugeben.

8. Landwirtschaftliche Arbeitsmaschine (1) nach einem der vorherigen Ansprüche, **dadurch gekennzeichnet, dass** der Sensor (13) eine Spannungsversorgung aufweist.

9. Landwirtschaftliche Arbeitsmaschine (1) nach einem der vorherigen Ansprüche, **dadurch gekennzeichnet, dass** die zumindest eine Rolle (10, 11, 12) eine Tragrolle (10), und zum Tragen eines die Umhüllungsbahn (9) bildenden Bahnvorrats (8) vorgesehen ist.

10. Landwirtschaftliche Arbeitsmaschine (1) nach einem der Ansprüche 1 - 9, **dadurch gekennzeichnet, dass** die zumindest eine Rolle (10, 11, 12) eine Vorstreckrolle (11, 12) zum Vorstrecken der Umhüllungsbahn (9) ist, wobei am Wickelarm (6) zwei Vorstreckrollen (11, 12) zum Hindurchführen der Umhüllungsbahn (9) zwischen diesen angeordnet sind.

11. Verfahren zum Betreiben einer landwirtschaftliche Arbeitsmaschine (1) nach einem der Ansprüche 1-10, bei dem ein Erntegutballen (2) beim Drehen des Wickelarms (6) um die Wickelarmachse (61) mit einer Umhüllungsbahn (9) umhüllt wird, wobei die Rolle (10, 11, 12) mit der Umhüllungsbahn (9) zusammenwirkt, so dass sie sich, insbesondere beim Abziehen der Umhüllungsbahn (9) vom Bahnvorrat (8), relativ zum Wickelarm (6) um ihre Rollenachse (101, 111, 121) dreht, wobei der Sensor (13) die auf die Rolle (11, 12, 13) wirkende Belastung (430) misst, und die Auswerteeinheit (3) die Umhüllungsstörung erfasst, wenn sich die Belastung sprungartig ändert und/oder wenn ein oszillierender Belastungsanteil (400) entfällt.
